# EUROPÄISCHE PATENTANMELDUNG

(11) **EP 3 858 952 A1**
(43) Veröffentlichungstag der Anmeldung: **04.08.2021**
(21) Anmeldenummer: 20154845.0
(22) Anmeldetag: 31.01.2020
(51) Int. Cl.: C10J 3/00, C10B 49/02, C10J 3/32, C10J 3/48, C10J 3/62, C10J 3/72

(54) **VERFAHREN UND VORRICHTUNG ZUR AUFSPALTUNG FESTER BRENNSTOFFE DURCH THERMISCHE ZERSETZUNG MITTELS PARTIELLER OXIDATION**

(71) Anmelder: Garden's Best GmbH, 24211 Preetz (DE)
(72) Erfinder: Kuntze, Björn, 26129 Oldenburg (DE)
(74) Vertreter: Patentanwälte Vollmann Hemmer Lindfeld Partnerschaft mbB

(57) **Zusammenfassung**

Die Erfindung betrifft ein Verfahren zur Aufspaltung fester Brennstoffe durch thermische Zersetzung des Brennstoffs in Brenngas und Kohle innerhalb eines im Wesentlichen horizontal liegenden, rohrförmigen ersten Reaktors (1), gekennzeichnet durch die Verfahrensschritte:
a. Zuführen des Brennstoffs in den ersten Reaktor (1) an einer Eintrittsseite des ersten Reaktors (1), wobei oberhalb des zugeführten Brennstoffs im ersten Reaktor (1) ein Gasraum (9) oberhalb eines Brennstoffbetts (5) ausgebildet ist,
b. Fördern des Brennstoffbetts (5) innerhalb des ersten Reaktors (1) von der Eintrittsseite zur einer der Eintrittsseite gegenüberliegenden Austrittsseite des ersten Reaktors (1) mittels einer mechanischen Rührvorrichtung (4),
c. Aufspalten des festen Brennstoffs durch thermische Zersetzung durch Teilvergasung mittels partieller Oxidation durch Zuführung von Oxidationsmittel in den Gasraum des ersten Reaktors, wobei das Oxidationsmittel über eine Mehrzahl an über die Länge des ersten Reaktors (1) verteilten Düsen (8) oberhalb des Brennstoffbetts (5) in den Gasraum (9) eingebracht wird, und
d. Ausschleusen der Kohle an der Austrittsseite des ersten Reaktors (1).

## Beschreibung

Die Erfindung betrifft ein Verfahren und eine Vorrichtung zur Aufspaltung fester Brennstoffe durch thermische Zersetzung des Brennstoffs in gasförmige Bestandteile (im Weiteren als Brenngas bezeichnet) und ein festes, kohlenstoffhaltiges Produkt (im Weiteren Kohle genannt) innerhalb eines Bewegtbettreaktors, sowie die gegebenenfalls gewünschte weitere Behandlung des erzeugten Brenngases zu Synthesegas oder Rauchgas und der erzeugten Kohle zu Aktivkohle oder Asche. Das Verfahren und die Vorrichtung dienen sowohl im Sinne einer Pyrolyse der effektiven Produktion von Kohle als auch im Sinne einer Vergasung der effektiven Produktion von Brenngas.

Zur Aufspaltung fester Brennstoffe in gasförmige Bestandteile und Kohle wird der aufzuspaltende Brennstoff unter Einfluss hoher Temperaturen von vorzugsweise ca. 250 °C bis ca. 750 °C thermisch zersetzt. Damit die dabei entstehenden Produkte (Brenngas und Kohle) nicht vollständig oxidieren und zur Kontrolle der Prozesstemperaturen, findet diese thermische Zersetzung in einer sauerstofffreien oder zumindest sauerstoffarmen Atmosphäre statt. Die Zusammensetzung der sich dabei bildenden gasförmigen Produkte besteht aus einer Vielzahl chemischer Verbindungen und richtet sich nach den eingesetzten Brennstoffen und den Prozessbedingungen. Typische Verbindungen sind CO, CO₂, H₂, H₂O, CH₄, C₂H₄, sowie eine Vielzahl weiterer niedermolekularer organischer Verbindungen, als auch höhermolekulare Öle und Teere, sowie Kohle.

Nach dem Stand der Technik findet diese Aufspaltung entweder in allothermen oder autothermen Reaktoren, oder in Mischformen dieser beiden grundlegenden Verfahrensvarianten, statt. Die allotherme Verfahrensvariante ist dadurch gekennzeichnet, dass die für den Prozess erforderliche Temperatur durch Wärmeeintrag von außen in den Reaktor (typischerweise mit der Reaktorwand als Wärmetauscherfläche) eingebracht wird. Demgegenüber wird bei der autothermen Prozessführung die erforderliche Wärmeenergie im Reaktor selbst erzeugt. Dies geschieht durch Teilverbrennung (partielle Oxidation). Hierbei wird durch Zuführung vergleichsweise geringer Mengen an Oxidationsmittel ein Teil des Brennstoffes und/oder der brennbaren Gase innerhalb des Reaktors verbrannt.

Ein aktuelles und sehr anschauliches Beispiel für eine Anlage zur Aufspaltung fester Brennstoffe mittels allothermer Reaktorkammern ist in der Patentschrift EP 1 943 461 B1 offenbart. Dort wird das in den beiden zylinderförmigen und parallel betriebenen allothermen Reaktorkammern aus dem festen Brennstoff produzierte Brenngas in einer externen Brennkammer mit Luft verbrannt. Das heiße Rauchgas wird dann um die beiden allothermen Reaktorkammern herumgeleitet und heizt somit die beiden allothermen Reaktorkammern auf. Zur Verbesserung der Wärmeübertragung verfügen die Wände der Reaktorkammern über Strömungsleitbleche und Anbauten. Als weiteres Produkt verlässt Kohle die Reaktorkammern.

Ein ebenso gut bekanntes Beispiel, jedoch für die autotherme Aufspaltung fester Brennstoffe in einem mehrstufigen Vergasungsverfahren für holzartige Biomasse, ist in der Patentschrift DE 198 07 988 B4 offenbart, welche die Verfahrensführung der autotherm betriebenen Entgasungsstufe zur Aufspaltung fester Brennstoffe beschreibt. Dort wird in einem liegenden, zylindrischen Reaktor eine Schüttung bevorzugt aus Holzhackschnitzeln mittels einer Rühreinrichtung durchgerührt und gleichzeitig von der Unterseite des liegenden Reaktors her Luft oder Sauerstoff so dosiert eingeblasen, dass durch die stattfindende exothermen Oxidationsreaktionen eine gewünschte Prozesstemperatur von ca. 500 °C aufrecht erhalten wird. Als Produkte verlassen Brenngas und Kohle den Entgasungsreaktor.

Wie in der DE 198 07 988 B4 erläutert, besteht der große Vorteil der autothermen Prozessführung darin, dass die Übertragung großer Mengen an Wärme auf einem hohen Temperaturniveau durch die Reaktorwandung hindurch, wie es bei der allothermen Prozessführung notwendig ist, vermieden wird. Die autotherme Prozessführung ist daher apparativ deutlich weniger aufwändig und somit deutlich wirtschaftlicher.

Unterstrichen wird diese These auch von einer Vielzahl aus wirtschaftlichen und technischen Gründen erfolgloser mehrstufiger Vergasungsprojekte mit allothermen Prozessstufen. Neben anderen Problemen gelang es dabei in der Regel nicht, die erforderliche Wärmeübertragung zu realisieren.

Demgegenüber ist festzuhalten, dass mehrstufige Vergasungsverfahren unter Nutzung autothermer Entgasungsstufen, wie z.B. in der DE 10 2007 012 452 B4 beschrieben, nachhaltig Markterfolge zu verzeichnen haben.

Allerdings weisen die bisher realisierten autothermen Prozessstufen zur Aufspaltung fester Brennstoffe in Brenngas und Kohle allesamt ein verfahrenstechnisches Manko auf: das Einblasen des Oxidationsmittels für den autothermen Prozess erfolgt direkt in die Kohleschüttung. Dies kann exemplarisch der Patentschrift DE 198 07 988 B4 entnommen werden. Obgleich die homogene Oxidationsreaktion zwischen Brenngas und Oxidationsmittel deutlich schneller und bevorzugt abläuft als dies für die heterogene Oxidationsreaktion zwischen dem Feststoff Kohle und dem Oxidationsmittel der Fall ist, führt das direkte Einblasen des Oxidationsmittels in die Kohleschüttung zu einem starken Verbrauch von Kohle. Dies geschieht, weil in der Kohleschüttung nicht genügend Brenngas vorhanden ist und daher örtlich überschüssig vorhandenes Oxidationsmittel die Kohle oxidiert. Zielt der Prozess auf die Produktion möglichst großer Mengen Kohle, ist diese Prozessführung somit ungeeignet.

Der vorliegenden Erfindung liegt das Problem zugrunde, in einem sehr kompakten und einfach aufgebauten Apparat feste Brennstoffe mit hoher auf den Reaktionsraum bezogener Leistungsdichte autotherm aufzuspalten, wobei die für den Prozess benötigte Wärme vorwiegend durch partielle Oxidation der Brenngase und nicht durch Verbrennung der Kohle bereitgestellt werden soll, da die Kohle von hohem wirtschaftlichen Interesse für eine nachgelagerte stoffliche Verwertung ist. Ferner soll die Menge und die Qualität der somit erzeugten Kohle über Variation der Prozessparameter beeinflussbar sein.

Dieses Problem wird durch die in den Patentansprüchen aufgeführten Merkmale gelöst. Ein erster Aspekt der vorliegenden Erfindung sieht ein autothermes Verfahren zur Aufspaltung fester Brennstoffe in Brenngas und Kohle durch thermische Zersetzung mittels partieller Oxidation vor, das die folgenden Schritte umfasst:
Zuführen des Brennstoffs in den ersten Reaktor an einer Eintrittsseite des ersten Reaktors, wobei oberhalb des zugeführten Brennstoffs im ersten Reaktor ein Gasraum oberhalb eines Brennstoffbetts ausgebildet ist;
Fördern des Brennstoffbetts innerhalb des ersten Reaktors von der Eintrittsseite zur einer der Eintrittsseite gegenüberliegenden Austrittseite des ersten Reaktors mittels einer mechanischen Rührvorrichtung;
Aufspalten des festen Brennstoffs durch thermische Zersetzung durch Teilvergasung mittels partieller Oxidation durch Zuführung von Oxidationsmittel in den Gasraum des ersten Reaktors, wobei das Oxidationsmittel über eine Mehrzahl an über die Länge des ersten Reaktors verteilten Düsen oberhalb des Brennstoffbetts in den Gasraum eingebracht wird; und
Ausschleusung der Kohle an der Austrittsseite am Ende des ersten Reaktors.

Optional kann der Massenstrom der einzelnen Düsen, beziehungsweise von zu Gruppen zusammengefassten Düsen, unabhängig voneinander so geregelt werden kann, dass sich entlang der Achse des ersten Reaktors ein gewünschtes Prozesstemperaturprofil ausbildet, wodurch die Leistungsfähigkeit des Systems bei gleichzeitiger Vermeidung von Verschlackung optimiert werden kann.

Optional kann durch Variation des Massendurchsatzes und des Prozesstemperaturprofils des ersten Reaktors der Anteil an produzierter Kohle in Bezug auf die eingesetzte Brennstoffmenge variiert werden und bei entsprechend großer Baulänge des ersten Reaktors oder unter Verwendung eines dem ersten Reaktors nachgeschalteten zweiten Reaktors die produzierte Kohle nachbehandelt werden. Im Rahmen der Nachbehandlung kann die Qualität der Kohle weiter gesteigert werden oder es kann die vollständige Oxidation (Veraschung) der Kohle erreicht werden. Die Nachbehandlung der Kohle zur Qualitätssteigerung kann in einem Temperaturbereich von 700 - 1000 °C erfolgen, vorzugsweise bei 800 - 900°C.

Optional kann durch Strömungsverbindung mit einem Brenngasreaktor, der vorzugsweise als Gas-Brennkammer ausgeführt ist, das Brenngas aus dem ersten Reaktor unter Zugabe von weiterem Oxidationsmittel nachbehandelt werden. Diese Nachbehandlung kann sowohl durch weitere unterstöchiometrische Zugabe von Oxidationsmittel und der damit verbundenen Temperaturerhöhung auf vorzugsweise ca. 1000 °C - 1300 °C zum Zwecke des thermischen Crackens höhermolekularer organischer Verbindungen, wie Teere, der Erzeugung eines sehr teerarmen Brenngases, wie es beispielsweise nach entsprechender Aufbereitung in Verbrennungskraftmaschinen eingesetzt werden kann, dienen. Alternativ kann aber auch durch überstöchiometrische Zugabe von Oxidationsmittel das Brenngas verbrannt werden und anschließend als Rauchgas thermisch genutzt werden.

Das erfindungsgemäße Verfahren hat den Vorteil, dass innerhalb eines einfach strukturierten Apparates bei hoher raumbezogener Leistungsdichte feste Brennstoffe thermisch durch partielle Oxidation in Brenngas und Kohle aufgespaltet werden können, wobei der Anteil an erzeugter Kohle hoch und deren Qualität beeinflussbar ist und zudem das Brenngas innerhalb eines Brenngasreaktors durch Hinzugabe von weiterem Oxidationsmittel in ein sehr teerarmes Brenngas umgewandelt werden kann.

Optional kann die Rührvorrichtung neben der Förderung des Brennstoffes durch den ersten Reaktor hindurch auch dessen Auflockerung, Umwälzung, sowie Durchmischung mit dem Brenngas und damit Wärmeübertragung vom Brenngas zur Kohle übernehmen.

Optional kann die Rührvorrichtung mit einer derart hohen Drehzahl betrieben werden, dass eine im ersten Reaktor befindliche Mischung aus Brennstoff und/oder Kohle, zumindest teilweise in Rotation um die Längsachse des ersten Reaktors versetzt wird und/oder über den Querschnitt des ersten Reaktors verteilt und innig mit dem Gasraum vermischt wird.

Optional kann die Drehzahl abhängig von der Feuchte des zugeführten Brennstoffs eingestellt werden, wobei die Drehzahl bei hoher Feuchte höher ist als bei niedriger Feuchte. Da die Kohle abrasive Wirkung hat und den ersten Reaktor sowie die Rühreinrichtung durch Reibung verschleißt, ist es vorteilhaft, die Drehzahl nur so hoch wie nötig einzustellen, um einen notwendigen Wärmeübertrag aus dem Brenngas in den Brennstoff zu erzielen. Da der benötigte Wärmeübertrag bei niedriger Feuchte des zugeführten Brennstoffs geringer ist, kann die Drehzahl entsprechend niedriger sein, um die Vorrichtung weniger zu verschleißen.

Optional kann der rohrförmige erste Reaktor einen runden, ovalen, rechteckigen oder auch U-förmigen Querschnitt aufweisen.

Optional kann der im Wesentlichen horizontal liegende, rohrförmige erste Reaktor in einem Winkelbereich von +/-15° gegenüber der Waagrechten angestellt sein. Insbesondere eine Anstellung derart, dass die Rühreinrichtung den Brennstoff und die Kohle bergauf fördert, sodass das Brennstoff-Kohle-Gemisch teilweise bergab zurückfällt, kann vorteilhaft sein, um den Vermischungsgrad und die Verweildauer im ersten Reaktor einzustellen. Auch hier kann der Anstellwinkel von der Feuchte des zugeführten Brennstoffs abhängig sein, wobei er vorzugsweise höher ist bei höherer Feuchte.

Optional kann das für die partielle Oxidation des Brennstoffes erforderliche Oxidationsmittel aus Luft, sauerstoffangereicherter Luft oder Sauerstoff, sowie auch insbesondere aus Mischungen der vorgenannten Stoffe mit Rauchgas, Wasserdampf und Kohlendioxid bestehen.

Optional kann das Oxidationsmittel auch von unterhalb des zugeführten Brennstoffs in den ersten Reaktor eingebracht werden, aber weniger als von oberhalb des zugeführten Brennstoffs in den Gasraum.

Optional kann der über die Düsen eingebrachte Massenstrom an Oxidationsmittel entweder einzeln für jede Düse oder in Gruppen von mehreren Düsen geregelt werden.

Optional kann der über die regelbaren Düsen eingebrachte Massenstrom an Oxidationsmittel (Vergasungsmittel) so geregelt werden, dass sich innerhalb des ersten Reaktors ein bestimmtes, gewünschtes Prozesstemperaturprofil einstellt.

Vorzugsweise kann der erste Reaktor in einem Temperaturbereich von 600 - 900 °C betrieben werden, vorzugsweise in einem Temperaturbereich von 700 - 800 °C. Grundsätzlich steigt mit steigender Temperatur die Durchsatzleistung. Andererseits verringert sich bei hohen Temperaturen der auf den Brennstoff bezogene erzielbare Kohleertrag. Da der Brennstoff während seiner Umsetzung im ersten Reaktor die Prozessschritte Erwärmung, Trocknung, Erwärmung, Entgasung und Vergasung durchläuft, die hinsichtlich ihres Energiebedarfs sehr unterschiedlich ausfallen, ist es vorteilhaft, die Oxidationsmittelzufuhr über die Düsen, bzw. Düsengruppen, individuell regelbar zu gestalten, da ansonsten unerwünschte lokale Überhitzungen auftreten können. Die Vermeidung von unerwünschten lokalen Überhitzungen durch eine Absenkung der Durchschnittstemperatur im gesamten Reaktor hätte den Nachteil, dass damit die Leistung des Reaktors insgesamt reduziert würde. Es hat sich gezeigt, dass ein Prozesstemperaturprofil von 720 °C - 750 °C in einem in etwa mittig zwischen der Eintrittsseite und der Austrittsseite gelegenen Mittelabschnitt des ersten Reaktors gute Ergebnisse erzielt. In einem unmittelbar vor der Austrittsseite gelegenen Endabschnitt des ersten Reaktors ist hingegen ein im Mittel höheres Prozesstemperaturprofil von beispielsweise 770 °C - 800 °C vorteilhaft.

Optional kann das Prozesstemperaturprofil so eingestellt werden, dass die Ascheerweichungstemperatur des Brennstoffs nicht überschritten wird. Die brennstoffspezifische Ascheerweichungstemperatur eines typischen Brennstoffs, wie etwa Holzhackschnitzel, liegt über 1000 °C. Allerdings ist ein Brennstoff nicht immer homogen, sondern kann eine heterogene Mischung aus verschiedenen Brennstoffen sein, beispielsweise bei Müll als Brennstoff. Gewisse Brennstoffe oder Brennstoffanteile können eine relativ niedrige Ascheerweichungstemperatur von beispielsweise 700 °C aufweisen, für welche die Anlage bei einer mittleren Gesamttemperatur im ersten Reaktor von beispielweise 600 °C - 650 °C bei gleichzeitig intensiver Vermischung des Brennstoffbettes mit dem Gasraum durch hohe Drehzahl der Rührvorrichtung betrieben werden kann.

Optional kann das Oxidationsmittel (Vergasungsmittel) vorgewärmt werden.

Optional kann das im ersten Reaktor produzierte Brenngas innerhalb des ersten Reaktors mindestens auf einer Teilstrecke des ersten Reaktors im Gegenstrom zur Förderrichtung des Brennstoffes geführt werden. Dies kann vorzugsweise durch Absaugung zu einem in der Nähe der Eintrittsseite angeordneten Brenngasausgang hin erfolgen. Die Führung des Brenngases im Gegenstrom ist besonders vorteilhaft, weil dadurch das heiße Brenngas zum kalten, gerade zugeführten Brennstoff geführt wird, sodass die Wärmeübertragsleistung vom Brenngas auf den Brennstoff erhöht wird. Optional kann also innerhalb des ersten Reaktors produziertes Brenngas nahe der Eintrittsseite des ersten Reaktors aus dem ersten Reaktor abgesaugt werden.

Optional kann durch Variation des Massendurchsatzes und des Prozesstemperaturprofils des ersten Reaktors der Anteil an produzierter Kohle in Bezug auf die eingesetzte Brennstoffmenge variiert werden.

Optional kann bei entsprechend großer Baulänge des ersten Reaktors oder unter Verwendung eines dem ersten Reaktor nachgeschalteten zweiten Reaktors die produzierte Kohle nachbehandelt werden, wobei die Nachbehandlung dabei entweder auf die weitere Steigerung der Qualität der Kohle oder auf die weitere oder vollständige Veraschung der Kohle zielt. Dabei kann die Nachbehandlung der Kohle zur Qualitätssteigerung in sauerstoffreduzierender Atmosphäre in einem Temperaturbereich von 700 - 1000 °C, vorzugsweise bei 800 - 900°C, erfolgen. Im Falle einer angestrebten Veraschung kann die Nachbehandlung in oxidierender Atmosphäre durch überstöchiometrische Zugabe von Oxidationsmittel auf einem Temperaturniveau von 750 - 950 °C, vorzugsweise bei 800 - 900°C, erfolgen. Hierbei kann zur Begrenzung der Prozesstemperaturen die Zumischung von Rauchgas und/oder Wasserdampf und/oder Kohlendioxid vorteilhaft sein.

Optional kann bei Verwendung eines zweiten Reaktors zur Kohlenachbehandlung dieser allotherm über Rauchgas oder durch aus dem als Gas-Brennkammer betriebenen Brenngasreaktor austretendes Gas oder mittels elektrischer Energie beheizt werden. Solch eine Beheizung hat den Vorteil, dass im zweiten Reaktor weniger oder gar kein Oxidationsmittel benötigt wird, was sich positiv auf den Kohleertrag auswirkt.

Optional kann durch Variation des Massendurchsatzes und des Prozesstemperaturprofils die Qualität und die Eigenschaften der produzierten Kohle beeinflusst werden.

Optional kann mit dem ersten Reaktor ein Brenngasreaktor in Form einer Gas-Brennkammer strömungsverbunden sein und dem Brenngasreaktor das Brenngas aus dem ersten Reaktor zugeführt und in dem Brenngasreaktor einer partiellen oder vollständigen Oxidation unterzogen werden.

Optional kann das im Brenngasreaktor eingesetzte Oxidationsmittel aus Luft, sauerstoffangereicherter Luft oder Sauerstoff, sowie auch insbesondere aus Mischungen der vorgenannten Stoffe mit Rauchgas, Wasserdampf und Kohlendioxid bestehen.

Optional kann das im Brenngasreaktor eingesetzte Oxidationsmittel vorgewärmt werden.

Optional kann das Brenngas im Brenngasreaktor durch unterstöchiometrische Zugabe von Oxidationsmittel nur soweit oxidiert werden, wie es zur Erzielung einer gewünschten Prozesstemperatur notwendig ist, um unerwünschte höherwertige Kohlenwasserstoffe und Teere aufzucracken, wodurch ein teerarmes Brenngas entsteht. Die für die Produktion von teerarmem Brenngas benötigten Prozesstemperaturen des Brenngasreaktors können 1000°C- 1300°C betragen. Je höher die Prozesstemperatur im Brenngasreaktor ist, umso besser werden langkettige Kohlenwasserstoffverbindungen gecrackt. Allerdings haben höhere Prozesstemperaturen den Nachteil, dass das produzierte teerarme Brenngas an Heizwert verliert, da durch die partielle Oxidation ein Teil des Heizwertes verloren geht. Da neben der Prozesstemperatur auch die Verweilzeit des Brenngases im Brenngasreaktor einen Einfluss auf das Cracken und damit auf den Teergehalt ausübt, kann durch Kombination einer genügend großen Verweilzeit mit moderater Prozesstemperatur ein gutes Ergebnis erzielt werden. In der Praxis hat sich daher eine Kombination aus einer Prozesstemperatur von 1070 - 1150 °C bei einer Verweilzeit von 1 - 3 Sekunden im Brenngasreaktor als vorteilhaft herausgestellt.

Optional kann das Brenngas im Brenngasreaktor durch stöchiometrische oder überstöchiometrische Zugabe von Oxidationsmittel vollständig ausgebrannt werden.

Optional kann der Brenngasreaktor oberhalb des ersten Reaktors angeordnet sein.

Optional kann das Brenngas vor Eintritt in den Brenngasreaktor in einer Entstaubungseinrichtung entstaubt werden, wobei die Entstaubung mittels Schwerkraft, Fliehkraft, elektrostatischer oder filternder Abscheider erfolgt.

Optional kann die Entstaubungseinrichtung als eine oberhalb des ersten Reaktors angeordnete, vorzugsweise größer als der erste Reaktor dimensionierte, Beruhigungskammer ausgebildet sein, wobei das Brenngas aufgrund der dort herrschenden langsamen und aufrecht gerichteten Strömung durch Gravitationskraft von Partikeln zumindest teilweise befreit wird, wobei die abgeschiedenen Partikel durch Gravitationskraft in den ersten Reaktor zurückfallen.

Gemäß einem zweiten Aspekt der vorliegenden Erfindung wird eine Vorrichtung zur Aufspaltung fester Brennstoffe durch thermische Zersetzung des Brennstoffs in Brenngas und Kohle innerhalb eines einfach strukturierten Apparates bereitgestellt, der als Bewegtbettreaktor ausgeführt ist. Die Vorrichtung umfasst einen im Wesentlichen horizontal liegenden, rohrförmigen ersten Reaktor mit Rührvorrichtung, die vorzugsweise neben der Förderung des Brennstoffes mit der Charakteristik eines Durchlaufreaktors durch den ersten Reaktor hindurch auch dessen Auflockerung, Umwälzung, sowie Durchmischung mit dem Brenngas und damit Wärmeübertragung vom Brenngas zur Kohle übernimmt. Entlang des ersten Reaktors sind oberhalb des Brennstoffbetts, vorzugsweise an der Oberseite des ersten Reaktors, mehrere Düsen zur Einbringung von Oxidationsmittel in den Gasraum oberhalb des Brennstoffbettes angebracht, wobei vorzugsweise der über die Düsen eingebrachte Massenstrom an Oxidationsmittel (Vergasungsmittel) entweder einzeln oder in Gruppen von mehreren Düsen, individuell regelbar ist. Durch die Wahl einer entsprechender Baulänge des ersten Reaktors kann die produzierte Kohle zur Erzielung bestimmter Qualitätseigenschaften nachbehandelt werden. Dies kann alternativ durch Verwendung eines dem ersten Reaktor nachgeschalteten zweiten Reaktors vorzugsweise gleichen Bautyps erreicht werden. Die Vorrichtung weist vorzugsweise einen dem ersten Reaktor strömungsverbundenen Brenngasreaktor in Form einer Gas-Brennkammer auf, in der das Brenngas oxidativ nachbehandelt werden kann. Zur Reduzierung der in die Gas-Brennkammer eingebrachten Staubfracht verfügt die Vorrichtung vorzugsweise über eine Entstaubungsvorrichtung zur Entstaubung des aus dem ersten Reaktor austretenden Brenngases, die auch in den ersten oder in den Brenngasreaktor integriert sein kann.

Optional kann der rohrförmige erste Reaktor einen runden, ovalen, rechteckigen oder auch U-förmigen Querschnitt aufweisen.

Optional kann der im Wesentlichen horizontal liegende, rohrförmige erste Reaktor in einem Winkelbereich von +/-15° gegenüber der Waagrechten anstellbar sein.

Optional kann der erste Reaktor auch an seiner Unterseite eine Mehrzahl von über die Länge des ersten Reaktors verteilten Düsen zur Zuführung von Oxidationsmittel (Vergasungsmittel) direkt in den Brennstoff aufweisen.

Optional kann der erste Reaktor einen Brenngasausgang nahe der Eintrittsseite des ersten Reaktors aufweisen, über den das Brenngas aus dem ersten Reaktor im Gegenstrom zur Förderrichtung des Brennstoffs aus dem Gasraum absaugbar ist.

Optional kann dem ersten Reaktor ein zweiter Reaktor nachgeschaltet sein, in dem die aus dem ersten Reaktor ausgeschleuste Kohle nachbehandelbar ist.

Optional kann der zweite Reaktor zur Kohlenachbehandlung eine Heizeinrichtung aufweisen, die mittels Wärmeübertrag allotherm aus Rauchgas oder aus einem als Gas-Brennkammer betriebenen Brenngasreaktor austretendem Gas oder auch mittels elektrischer Energie betreibbar ist.

Optional kann mit dem ersten Reaktor ein Brenngasreaktor in Form einer Gas-Brennkammer strömungsverbunden sein und dem Brenngasreaktor das Brenngas aus dem ersten Reaktor zuführbar sein, um dieses einer partiellen oder vollständigen Oxidation im Brenngasreaktor zu unterziehen.

Optional kann der Brenngasreaktor oberhalb des ersten Reaktors angeordnet sein.

Optional kann eine Entstaubungseinrichtung zwischen dem ersten Reaktor und dem Brenngasreaktor geschaltet sein, in der das Brenngas vor Eintritt in den Brenngasreaktor über Schwerkraft, Fliehkraft, elektrostatische oder filternde Abscheider entstaubbar ist.

Optional kann die Entstaubungseinrichtung als eine oberhalb des ersten Reaktors angeordnete, vorzugsweise größer als der erste Reaktor dimensionierte, Beruhigungskammer ausgebildet sein, wobei das Brenngas aufgrund der dort herrschenden langsamen und aufrecht gerichteten Strömung durch Gravitationskraft von Partikeln zumindest teilweise befreibar ist, indem die abgeschiedenen Partikel durch Gravitationskraft in den ersten Reaktor zurückfallen.

Nachfolgend sind Ausführungsbeispiele der Erfindung anhand von Zeichnungen erläutert. Es zeigen:
- Figur 1: eine schematische Darstellung einer vorteilhaften Ausführungsform einer Vorrichtung gemäß der Erfindung anhand der die erfindungsgemäßen Verfahrensschritte erläutert werden;
- Figur 2: ein weiteres Ausführungsbeispiel der Erfindung, das neben dem ersten und Brenngasreaktor einen zweiten Reaktor zur Nachbehandlung der Kohle darstellt;
- Figur 3: ein weiteres Ausführungsbeispiel der Erfindung, das neben dem ersten und Brenngasreaktor eine Vorrichtung zur Reduzierung des Staubgehaltes mittels Fliehkraftabscheidung darstellt; und
- Figur 4: ein weiteres Ausführungsbeispiel der Erfindung, das neben dem ersten und Brenngasreaktor eine Vorrichtung zur Reduzierung des Staubgehaltes mittels Schwerkraftabscheidung darstellt.

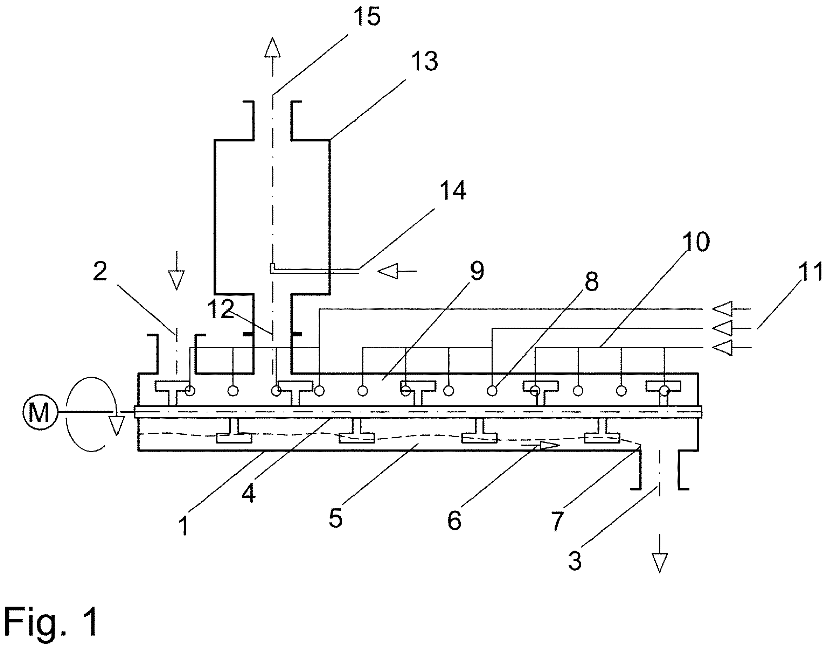

Die Figur 1 zeigt in schematischer Darstellung eine erfindungsgemäße Vorrichtung für die Durchführung des erfindungsgemäßen Verfahrens zur Aufspaltung fester Brennstoffe durch thermische Zersetzung mittels partieller Oxidation bestehend aus einem ersten Reaktor 1 und einem Brenngasreaktor 13.

Der erste Reaktor 1 ist als Bewegtbettreaktor, einem im Wesentlichen horizontal liegenden, rohrförmigen Reaktor mit Rührvorrichtung 4 ausgeführt. Charakteristisch für den ersten Reaktor 1 ist, dass der Brennstoff auf der Eintrittsseite über einen Brennstoffeinfüllstutzen 2 in den ersten Reaktor 1 eingebracht und die im Reaktor 1 erzeugte Kohle auf der gegenüberliegenden Seite, der Austrittseite, über einen Kohleentnahmestutzen 3 wieder ausgebracht wird und die Rührvorrichtung 4 dabei das Brennstoffbett 5 auflockert, umwälzt, sowie eine Durchmischung mit dem Brenngas ermöglicht, was die Wärmeübertragung aus dem Brenngas in den Brennstoff begünstigt und im Wesentlichen mit der Charakteristik eines Durchlaufreaktors mit Förderrichtung 6 zur Austrittseite hin fördert. Die im ersten Reaktor 1 befindliche Brennstoffmenge kann über Drehzahl und Fördercharakteristik der Rühreinrichtung, über den Anstellwinkel des ersten Reaktors 1 gegenüber der Waagrechten und über die Höhe des Schotts 7 den Bedürfnissen angepasst werden. Das Brennstoffbett 5 erhitzt sich im Laufe des Durchlaufes durch den ersten Reaktor 1 auf Temperaturen bis ca. 750 °C und entgast dadurch. Die für die Erhitzung benötigte Prozessenergie wird mittels partieller Oxidation (Teilvergasung) des Brennstoffes, insbesondere des sich bildenden Brenngases und - in untergeordnetem Maße - durch Teilvergasung der Kohle bereitgestellt. Das hierfür erforderliche Oxidationsmittel (Vergasungsmittel) 11, welches Luft, sauerstoffangereicherte Luft oder Sauerstoff, sowie auch insbesondere Mischungen mit Rauchgas, Wasserdampf und Kohlendioxid sein kann, wird über eine Mehrzahl an Düsen 8, die über die Länge des ersten Reaktors verteilt angeordnet sind, eingebracht. Zur Erzielung einer größtmöglichen Ausbeute an Kohle sind die Düsen 8 in dem über dem Brennstoffbett 5 befindlichen Gasraum 9 angeordnet. Der Massenstrom dieser Düsen ist entweder einzeln oder in Gruppen von mehreren Düsen 10, individuell regelbar. Mit der Regelbarkeit der Düsen wird eine gezielte Zuführung von Oxidationsmittel 11 entlang der Länge des ersten Reaktors erreicht, wodurch die Prozesstemperaturen entlang der Länge des ersten Reaktors weitgehend unabhängig voneinander eingestellt werden können. Damit ist der Prozess auf unterschiedliche Brennstoffe, unterschiedliche Durchsatzraten und unterschiedliche Qualitäten der erzeugten Kohle einstellbar und es kann insbesondere durch Begrenzung der Prozesstemperaturen eine Verschlackung der Asche vermieden werden. Das Brenngas wird über den Gasaustrittsstutzen 12 aus dem ersten Reaktor 1 abgesaugt und gelangt in einen strömungsverbundenen Brenngasreaktor 13, der in Form und Funktion einer Gas-Brennkammer gleicht und sich oberhalb des ersten Reaktors 1 befindet. Da der Gasaustrittsstutzen 12 nahe der Eintrittsseite des ersten Reaktors 1 angeordnet ist, wird durch die Absaugung des Brenngases das Brenngas entgegen der Förderrichtung 6 über das Brennstoffbett 5 durch den Gasraum 9 geführt, was für die Wärmeübertragleistung von Brenngas auf den Brennstoff förderlich ist. Im Brenngasreaktor 13 eine weitere Zugabe von Oxidationsmittel 14. Zielt der Prozess auf die Produktion eines sehr teerarmen Brenngases, dann erfolgt die Oxidationsmittelzugabe 14 unterstöchiometrisch und derart geregelt, dass sich die in dem Brenngasreaktor 13 einstellenden Temperaturen typischerweise auf gewünschte Werte im Bereich von 1000 °C - 1300 °C regeln lassen. Hierdurch findet ein thermisches Cracken der unerwünschten höhermolekularen organischen Verbindungen, wie Teere, statt. Das somit im Brenngasreaktor 13 behandelte Brenngas wird über den Gasaustrittstutzen 15 aus dem Brenngasreaktor 13 abgesaugt und eignet sich nach entsprechender Kühlung und Entstaubung zur Verwertung in Verbrennungskraftmaschinen.

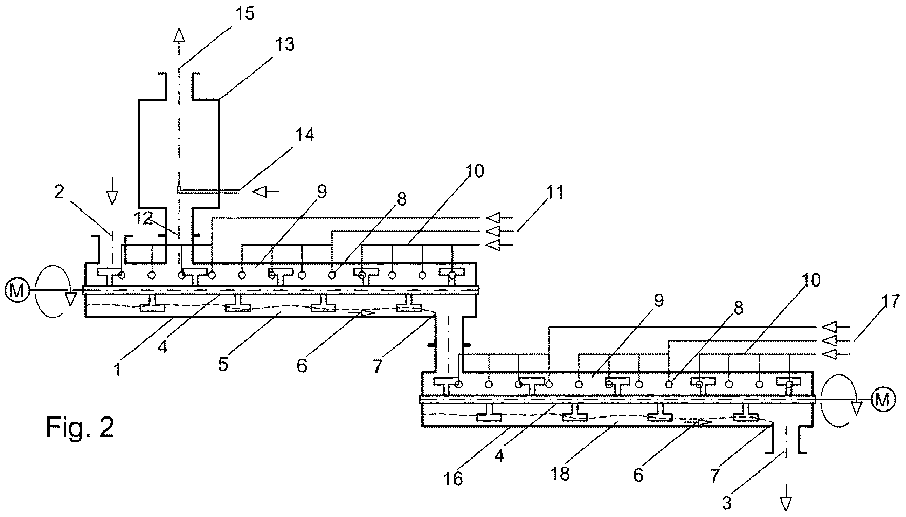

Die Figur 2 zeigt in schematischer Darstellung eine weitere vorteilhafte Ausgestaltung der Erfindung mit dem Ziel der Nachbehandlung der im ersten Reaktor 1 produzierten Kohle mittels eines dem ersten Reaktor 1 nachgeschalteten zweiten Reaktors 16, der im Wesentlichen wie der erste Reaktor 1 aufgebaut ist. Da die mit dem erfindungsgemäßen Verfahren produzierte Kohle teils für hochwertige Anwendungen in der Pharmazie oder in der Lebensmittelproduktion eingesetzt wird, ist in manchen Fällen eine Nachbehandlung der im ersten Reaktor 1 erzeugten Kohle erforderlich. Die Nachbehandlung zielt dabei auf Verbesserung des H/C und des O/C-Verhältnisses der Kohle und/oder auf die Vergrößerung der spezifischen inneren Oberfläche der Kohle beziehungsweise auf eine Beeinflussung der Porenstruktur, wie es aus der Herstellung von Aktivkohle bekannt ist. Diese Nachbehandlung basiert auf einer Temperaturbehandlung, die durch eine weitere Zugabe von Oxidationsmittel 17 erreicht wird in Verbindung mit einer gewissen Verweildauer von bis zu einer Stunde der Kohle im Kohlebett 18. Die Nachbehandlung der Kohle erfolgt zur Qualitätssteigerung in einem Temperaturbereich von 700 - 1000 °C, vorzugsweise bei 800 - 900°C, im zweiten Reaktor 16. Je nach Bedarf können dem Oxidationsmittel 17 weitere Hilfsstoffe, wie vorzugsweise Wasserdampf und/oder Kohlendioxid, zugesetzt werden. Alternativ kann die Temperaturbehandlung im zweiten Reaktor 16 auch mithilfe elektrischer Beheizung und gegebenenfalls der Zugabe von Reduktionsmitteln, wie vorzugsweise Wasserdampf und/oder Kohlendioxid, erfolgen. Durch eine allotherme Aufheizung des zweiten Reaktors 16 muss weniger oder gar kein Oxidationsmittel 17 im zweiten Reaktors 16 zugeführt werden, was für den Kohleertrag förderlich ist.

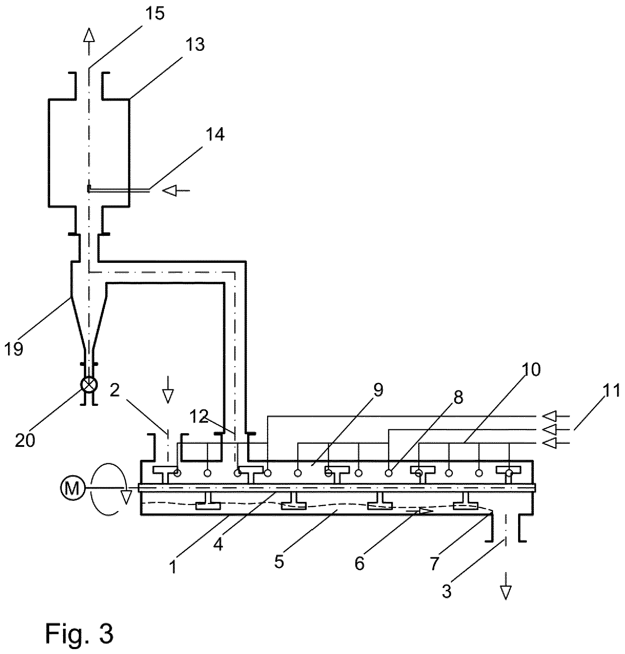

Die Figur 3 zeigt in schematischer Darstellung eine weitere vorteilhafte Ausgestaltung der Erfindung, bei der zwischen dem ersten Reaktor 1 und dem Brenngasreaktor 13 eine Entstaubung des Brenngases über einen Zyklon 19 erfolgt. Der im Zyklon 19 abgeschiedene Staub wird beispielsweise mittels einer Zellenradschleuse 20 ausgeschleust. Die Entstaubung des Brenngases nach dem ersten Reaktor 1 hat den Vorteil, dass der Staub nicht in die nachfolgenden Anlagenteile gelangt und auch eine Schlackebildung innerhalb des Brenngasreaktors 13 oder der nachfolgenden Anlagenteile infolge der hohen Temperaturen im Brenngasreaktor 13, verhindert wird. Je nach Prozesstemperaturprofil im ersten Reaktor 1 und Position des Gasaustrittstutzens 15 bezüglich der Eintrittsseite des ersten Reaktors 1 kann die Temperatur der aus dem ersten Reaktor 1 austretenden bzw. abgesaugten staubhaltigen Gase zwischen 500 °C - 800 °C, vorzugsweise zwischen 600 °C - 700 °C, liegen. Dies ist unterhalb der zulässigen Einsatztemperaturen hochwarmfester Stähle und insbesondere unterhalb der Ascheerweichungstemperaturen der meisten Brennstoffe (Biomassen). Somit eignet sich diese Ausgestaltung der Erfindung insbesondere für Brennstoffe mit niedrigen Ascheerweichungstemperaturen. Ein weiterer Vorteil ist, dass die Entaschung bei vergleichsweise niedrigen Temperaturen erfolgen kann und der apparative und werkstofftechnische Aufwand für die Entstaubungsanlage vergleichsweise gering ist. Gleichzeitig kann der Brenngasreaktor 13 räumlich unabhängig vom ersten Reaktor 1 angeordnet werden.

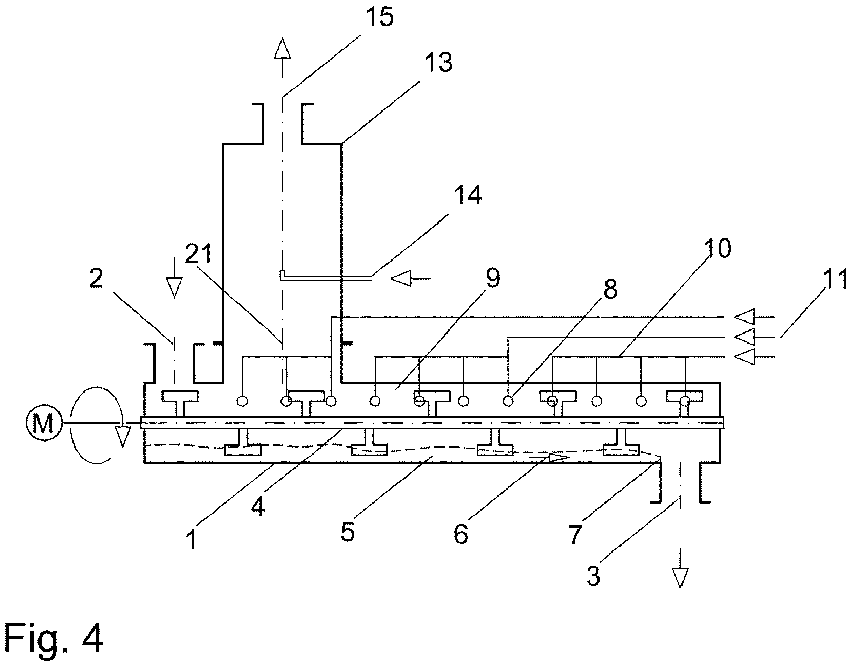

Die Figur 4 zeigt in schematischer Darstellung eine weitere vorteilhafte Ausgestaltung der Erfindung, bei der eine Vorentstaubung der aus dem ersten Reaktor 1 austretenden Brenngase dadurch erreicht wird, dass im Übergangsbereich des ersten Reaktors 1 zum Brenngasreaktor 13 ein Zwischenstück mit großem Querschnitt als Staubabscheidebereich 21 realisiert wird, wobei infolge des großen Querschnittes die Strömungsgeschwindigkeit der aufwärts gerichteten Brenngasströmung so gering ist, dass gröbere Partikel bedingt durch die Schwerkraft nicht mit der Brenngasströmung mitgerissen werden, sondern durch Gravitationskraft in den ersten Reaktor 1 zurück fallen. Diese Form der Vorentstaubung reduziert ebenfalls erheblich das Risiko und Ausmaß von Verschlackungen in und nach dem Brenngasreaktor 13.

### Bezugszeichenliste

- 1: erster Reaktor
- 2: Brennstoffeinfüllstutzen
- 3: Kohleentnahmestutzen
- 4: Rührvorrichtung
- 5: Brennstoffbett
- 6: Förderrichtung
- 7: Schott
- 8: Düsen
- 9: Gasraum
- 10: Düsengruppe
- 11: Oxidationsmittel
- 12: Gasaustrittstutzen
- 13: Brenngasreaktor
- 14: Oxidationsmittel
- 15: Gasaustrittstutzen
- 16: zweiter Reaktor
- 17: Oxidationsmittel
- 18: Kohlebett
- 19: Zyklon
- 20: Zellenradschleuse
- 21: Staubabscheidebereich

## Patentansprüche

1. Verfahren zur Aufspaltung fester Brennstoffe durch thermische Zersetzung des Brennstoffs in Brenngas und Kohle innerhalb eines im Wesentlichen horizontal liegenden, rohrförmigen ersten Reaktors (1), **gekennzeichnet durch** die Verfahrensschritte:
a. Zuführen des Brennstoffs in den ersten Reaktor (1) an einer Eintrittsseite des ersten Reaktors (1), wobei oberhalb des zugeführten Brennstoffs im ersten Reaktor (1) ein Gasraum (9) oberhalb eines Brennstoffbetts (5) ausgebildet ist,
b. Fördern des Brennstoffbetts (5) innerhalb des ersten Reaktors (1) von der Eintrittsseite zur einer der Eintrittsseite gegenüberliegenden Austrittsseite des ersten Reaktors (1) mittels einer mechanischen Rührvorrichtung (4),
c. Aufspalten des festen Brennstoffs durch thermische Zersetzung durch Teilvergasung mittels partieller Oxidation durch Zuführung von Oxidationsmittel in den Gasraum des ersten Reaktors, wobei das Oxidationsmittel über eine Mehrzahl an über die Länge des ersten Reaktors (1) verteilten Düsen (8) oberhalb des Brennstoffbetts (5) in den Gasraum (9) eingebracht wird, und
d. Ausschleusen der Kohle an der Austrittsseite des ersten Reaktors (1).

2. Verfahren nach Anspruch 1, wobei die Drehzahl abhängig von der Feuchte des zugeführten Brennstoffs eingestellt wird, wobei die Drehzahl bei hoher Feuchte höher ist als bei niedriger Feuchte.

3. Verfahren nach einem der vorhergehenden Ansprüche, **dadurch gekennzeichnet, dass** der im Wesentlichen horizontal liegende, rohrförmige erste Reaktor (1) in einem Winkelbereich von +/-15° gegenüber der Waagrechten angestellt wird.

4. Verfahren nach einem der vorhergehenden Ansprüche, **dadurch gekennzeichnet, dass** der über die Düsen (8) eingebrachte Massenstrom an Oxidationsmittel entweder einzeln für jede Düse (8) oder in Gruppen von mehreren Düsen (8) geregelt wird.

5. Verfahren nach einem der vorhergehenden Ansprüche, **dadurch gekennzeichnet, dass** der über die regelbaren Düsen (8) eingebrachte Massenstrom an Oxidationsmittel (Vergasungsmittel) so geregelt wird, dass sich innerhalb des ersten Reaktors (1) ein bestimmtes, gewünschtes Prozesstemperaturprofil einstellt.

6. Verfahren nach einem der vorhergehenden Ansprüche, **dadurch gekennzeichnet, dass** das Oxidationsmittel (Vergasungsmittel) vorgewärmt wird.

7. Verfahren nach einem der vorhergehenden Ansprüche, **dadurch gekennzeichnet, dass** das im ersten Reaktor (1) produzierte Brenngas innerhalb des ersten Reaktors (1) mindestens auf einer Teilstrecke des ersten Reaktors (1) im Gegenstrom zur Förderrichtung (6) des Brennstoffbetts (5) geführt wird.

8. Verfahren nach einem der vorhergehenden Ansprüche, **dadurch gekennzeichnet, dass** das Brenngas vor Eintritt in einen Brenngasreaktor (13) in einer Entstaubungseinrichtung (19, 20, 21) entstaubt wird, wobei die Entstaubung mittels Schwerkraft, Fliehkraft, elektrostatischer oder filternder Abscheider erfolgt.

9. Vorrichtung zur Aufspaltung fester Brennstoffe durch thermische Zersetzung des Brennstoffs in Brenngas und Kohle innerhalb eines im Wesentlichen horizontal liegenden, rohrförmigen ersten Reaktors (1), **dadurch gekennzeichnet, dass**
a. der erste Reaktor (1) über eine Eintrittsseite zur Zuführung des Brennstoffes in den ersten Reaktor und eine der Eintrittsseite gegenüberliegende Austrittsseite zur Ausschleusung von Kohle verfügt,
b. der erste Reaktor (1) eine mechanische Rührvorrichtung (4) zur Förderung eines Brennstoffbetts (5) innerhalb des ersten Reaktors (1) von der Eintrittsseite zur Austrittsseite aufweist, und
c. der erste Reaktor (1) oberhalb des Brennstoffbetts (5) eine Mehrzahl von über die Länge des ersten Reaktors (1) verteilten Düsen (8) zur Zuführung von Oxidationsmittel (Vergasungsmittel) aufweist, mittels welcher die Aufspaltung des festen Brennstoffs durch thermische Zersetzung durch Teilvergasung mittels partieller Oxidation steuerbar ist.

10. Vorrichtung nach Anspruch 9, **dadurch gekennzeichnet, dass** der im Wesentlichen horizontal liegende, rohrförmige erste Reaktor (1) in einem Winkelbereich von +/-15° gegenüber der Waagrechten anstellbar ist.

11. Vorrichtung nach einem der Ansprüche 9 bis 10, **dadurch gekennzeichnet, dass** der erste Reaktor (1) auch unterhalb des Brennstoffbetts (5) eine Mehrzahl von über die Länge des ersten Reaktors verteilten Düsen zur Zuführung von Oxidationsmittel (Vergasungsmittel) aufweist.

12. Vorrichtung nach einem der Ansprüche 9 bis 11, **dadurch gekennzeichnet, dass** der erste Reaktor (1) einen Brenngasausgang (12) nahe der Eintrittsseite des ersten Reaktors (1) aufweist, über den das Brenngas aus dem ersten Reaktor (1) im Gegenstrom zur Förderrichtung (6) des Brennstoffs aus dem Gasraum (9) absaugbar ist.

13. Vorrichtung nach einem der Ansprüche 9 bis 12, **dadurch gekennzeichnet, dass** dem ersten Reaktor (1) ein zweiter Reaktor (16) nachgeschaltet ist, in dem die aus dem ersten Reaktor (1) ausgeschleuste Kohle nachbehandelbar ist.

14. Vorrichtung nach Anspruch 13, **dadurch gekennzeichnet, dass** der zweite Reaktor (13) zur Kohlenachbehandlung eine Heizeinrichtung aufweist, die mittels Wärmeübertrag aus Rauchgas oder aus einem als Gas-Brennkammer betriebenen Brenngasreaktor (13) austretendem Gas oder mittels elektrischer Energie betreibbar ist.

15. Vorrichtung nach einem der Ansprüche 9 bis 14, **dadurch gekennzeichnet, dass** mit dem ersten Reaktor (1) ein Brenngasreaktor (13) in Form einer Gas-Brennkammer strömungsverbunden ist und dem Brenngasreaktor (13) das Brenngas aus dem ersten Reaktor (1) zuführbar ist, um dieses einer partiellen oder vollständigen Oxidation im Brenngasreaktor (13) zu unterziehen.
